(19) **Europäisches Patentamt**

**European Patent Office**

**Office européen des brevets**

(11) **EP 0 774 109 B1**

(12) **EUROPÄISCHE PATENTSCHRIFT**

(45) Veröffentlichungstag und Bekanntmachung des Hinweises auf die Patenterteilung:
**04.10.2000   Patentblatt 2000/40**

(51) Int Cl.$^7$: **G01H 13/00**, G01H 9/00

(21) Anmeldenummer: **95924242.1**

(22) Anmeldetag: **14.06.1995**

(86) Internationale Anmeldenummer:
**PCT/EP95/02316**

(87) Internationale Veröffentlichungsnummer:
**WO 96/04532 (15.02.1996 Gazette 1996/08)**

(54) **VERFAHREN ZUM BESTIMMEN DES SCHWINGUNGSVERHALTENS EINES KÖRPERS**

PROCESS FOR DETERMINING THE VIBRATION CHARACTERISTICS OF A BODY

PROCEDE DE DETERMINATION DES CARACTERISTIQUES VIBRATOIRES D'UN CORPS

(84) Benannte Vertragsstaaten:
**DE ES FR GB IT SE**

(30) Priorität: **04.08.1994   DE 4427692**

(43) Veröffentlichungstag der Anmeldung:
**21.05.1997   Patentblatt 1997/21**

(73) Patentinhaber: **Bayerische Motoren Werke Aktiengesellschaft**
**80788 München (DE)**

(72) Erfinder:
• **FREYMANN, Raymond**
  **D-85386 Eching (DE)**
• **HONSBERG, Wolfram**
  **D-84405 Dorfen (DE)**
• **WINTER, Franz**
  **D-80637 München (DE)**
• **STEINBICHLER, Hans**
  **D-83115 Neubeuern (DE)**

(56) Entgegenhaltungen:
**EP-A- 0 215 660**

• **TECHNISCHES MESSEN TM 1982 - 1988 INCOMPLETE, Bd. 60, Nr. 6, Juni 1993 Seiten 228-234, XP 000377568 WECK M ET AL 'SCHWINGUNGSFORMANALYSE MIT HOLOGRAFISCHER INTERFEROMETRIE UND MODALANALYSE ANALYSIS OF VIBRATION FORMS WITH HOLOGRAPHIC INTERFEROMETRY AND MODAL ANALYSIS'**
• **IEEE TRANSACTIONS ON ULTRASONICS, FERROELECTRICS AND FREQUENCY CONTROL, Bd. 40, Nr. 3, 1.Mai 1993 Seiten 265-269, XP 000382843 BAYON A ET AL 'MEASUREMENT OF THE LONGITUDINAL AND TRANSVERSE VIBRATION FREQUENCIES OF A ROD BY SPECKLE INTERFEROMETRY'**
• **APPLIED OPTICS, Bd. 33, Nr. 5, 10.Februar 1994 NEW YORK US, Seiten 775-786, XP 000429136 G.O.ROSVOLD 'Video-based vibration analysis using projected fringes'**

**Beschreibung**

Die Erfindung bezieht sich auf ein Verfahren zum Bestimmen des Schwingungsverhaltens eines Körpers mittels Modelanalyse.

Bei der Modalanalyse wird die dynamische strukturelle Antwort des Körpers auf eine äußere Anregung an definerten Stellen des Körpers bestimmt. Hierzu werden an diesen Stellen z.b. Beschleunigungs-Aufnehmer angebracht, deren Ausgangssignal eine Information über die Beschleunigung des Körpers an den jeweiligen Stellen in zumindest einer Beschleunigungsrichtung liefert. Nachgeschaltete Berechnungsverfahren lassen Aussagen über das Schwingungsverhalten des Körpers für die jeweilige Anregungsfrequenz zu und ermöglichen z.B. die Bestimmung der modalen Kenngrößen des Schwingungssystems. Diese Kenngrößen sind: die Eigenfrequenzen, die Eigenformen, die generalisierten Massen und die modalen Dämpfungen.

Will man das Schwingungsverhalten eines komplexen Körpers bestimmen, so erfordert dies eine relativ große Anzahl von Aufnehmern an einer entsprechend großen Anzahl von Meßpunkten. Da die Aufnehmer und die zugehörigen Übertragungselemente für das Meßsignal, i.d.R. elektrische Leitungen, selbst eine Masse und eine Steifigkeit besitzen, führt dies zu einer Veränderung des Schwingungsverhaltens, die umso größer ist, je mehr Meßpunkte vorgesehen sind und je leichter der zu vermessende Körper ist. Die Modalanalyse stößt damit andie Grenzen ihres Einsatzbereichs.

Ein Beispiel für eine konventionelle Modalanalyse unter Verwendung von Beschleunigungsgebern, die an diskreten Stellen einer Teststruktur angeordnet sind, findet sich in dem Artikel "Schwingungsformanalyse mit holografischer Interferometrie und Modalanalyse" in Technisches Messen TM 1982-1988, Bd. 60, Nr. 6, Juni 1993, S. 228-234. In diesem Artikel ist ferner der Einsatz von Verfahren zur holografischen Interferometrie als Ersatz oder Ergänzung dieser Modalanalyse für die Bestimmung des vollständigen Schwingungsverhalten eines Körpers beschrieben.

Aus "IEEE Transactions on Ultrasonics Ferroelectrics and Frequency Control", 40 (1993)May, No.3, S. 265-269 ist ein Verfahren zur Messung der longitudinalen und transversalen Eigenschwingungen eines Stabes mittels Speckle-Interferometrie bekannt. Aus den dabei verwendeten Interferenzbildern lassen sich nicht die mittels Modalanalyse zu gewinnenden Aussagen über die dynamisch strukturelle Antwort eines Körpers auf eine äußere Anregung ableiten.

Der Erfindung liegt die Aufgabe zugrunde, ein Verfahren der eingangs genannten Art zu schaffen, mit dem es möglich ist, die Modalanalyse für eine praktisch nicht begrenzte Anzahl von Meßpunkten des Körpers durchzuführen.

Die Erfindung löst diese Aufgabe durch die kennzeichnenden Merkmale des Patentanspruchs 1.

Das Schwingungsverhalten wird optisch mit Hilfe Interferenzbilder bestimmt. Diese Bestimmung erfolgt ohne jede Beeinträchtigung des Körpers selbst, insbesondere ohne Applikation irgendwelcher Meßwertaufnehmer.

Im Gegensatz zu der Gewinnung allein eines optischen Interferenzbildes, anhand dessen die Schwingungsform und -amplitude der Struktur für eine definierte Anregungsfrequenz bestimmt wird, dienen die Interferenzbilder hier als Meßdaten zur Anpassung der Parameter eines mathematisch/physikalischen Modells, mit dessen Hilfe die Eigenschaften des Objektes als System beschrieben werden. Dieses Modell leitet sich aus der bekannten Grundgleichung für die dynamischen Kräfte eines linearen, zeitinvarianten elastomechanischen Mehrfreiheitsgradesystems ab, auf das beliebige äußere Kräfte einwirken können. Es wird davon ausgegangen, daß sich diese Struktur mit N diskreten Freiheitsgraden durch eine Schwingerkette mit N modalen, entkoppelten Freiheitsgraden beschreiben läßt.

Aus dem Übertragungsverhalten zwischen den aus den Interferenzbildem ermittelten Schwingungen des Körpers an den verschiedenen Stellen und der anregenden Kraft lassen sich dann über modalanalytische Auswertungen die modalen Kenngrößen des Körpers zumindest teilweise bestimmen.

Die konkrete Ausgestaltung der Erfindung ist auf verschiedene Weise möglich. Bevorzugt wird für die Gewinnung der Interferenzbilder die (kohärente) Lasertechnik verwendet. Damit ist es möglich, Schwingungen zu detektieren, sofern die Schwingungsamplitude größer als die halbe Wellenlänge des Lasers ist. Altemativ ist es möglich, das Interferenzbild auch mittels eines Moireeverfahrens zu erhalten.

Bei Verwendung kohärenten Lichts kann jedes Interferenzbild selbst auf unterschiedliche Weise gewonnen werden. Bevorzugt ist es ein Hologramm in Form beispielsweise eines Doppel- oder Mehrfachpulshologramms, das für die Auswertung in entsprechender Weise rekonstruiert werden kann.

Anstelle eines Hologramms kann das Interferenzbild auch mittels holografischer interferometrie oder Laser-Doppler-Vibrometrie gewonnen werden. Bei der holografischen Interferometrie wird das (gesamte) Schwingungsverhalten des Körpers zu definiertem Zeitpunkt in Form von optischen Interferenzbildem festgehalten. Bei der Laser-Doppler-Vibrometrie wird das Schwingungsverhalten des Körpers in Form der Geschwindigkeitsverteilung auf seiner Oberfläche festgehalten, wobei die Geschwindigkeitsmessung über die Frequenzverschiebung eines monochromatischen Laserlichtstrahls erfolgt (Doppler-Effekt). Für alle genannten Verfahren existieren ausgereifte Bildverarbeitungsprogramme.

Besonders wesentlich ist im Rahmen der Erfindung, durch stroboskopische Beleuchtung und Aufnahme des Interferenzbildes in zwei verschiedenen Schwingungszuständen Phasen bezüglich einer Referenzphase (z.B. Kraft oder Beschleunigung) zu bestimmen. Das mathematisch/physikalische Modell erlaubt es, unter Verwendung dieser Phasenmessung jedem Bildpunkt Amplitude und Phase bzw. Real- und Imaginärteil zuzuordnen und damit die physikalischen Parameter für das Schwingungsverhalten jedes einzelnen Bildpunktes vollständig zu bestimmen.

Für eine detaillierte Untersuchung eines Körpers über einen interessierenden Frequenzbereich hinweg ist es erforderlich, das erfindungsgemäße Verfahren für unterschiedliche Anregungsfrequenzen des Körpers anzuwenden. Es können diskrete voneinander unabhängige Frequenzen oder Frequenzen sein, die einen definierten gleichen Frequenzabstand voneinander besitzen. Es ist dann möglich, die modale Kenngrößen des Körpers auf der Grundlage der Modalanalyse zu bestimmen.

Die Modalanalyse erfordert, daß die experimentelle Ermittlung des Schwingungsverhaltens des Körpers in einer definierten Weise erfolgt, so daß das Übertragungsverhalten zwischen den (optisch) ermittelten Körperschwingungen und der äußeren Körperanregung bestimmt werden kann. Dieses Übertragungsverhalten kann z.B. im Frequenzbereich in Form von Frequenzgangkurven aber auch im Zeitbereich in Form von zeitlichen Abklingkurven (decay curves) oder transienten Übertragungskurven dargestellt werden.

Dieses auf experimentellem Wege ermittelte Übertragungsverhalten des Körpers bildet die Grundlage der nachgeschalteten Berechnungsverfahren, unter deren Einsatz die modalen strukturellen Kennwerte des Körpers numerisch ermittelt werden können. Das diesem Berechnungsverfahren zugrundeliegende mathematische Modell beinhaltet im allgemeinen die Bewegungsgleichungen eines linearen, zeitinvarianten elastomechanischen Systems mit mehreren Freiheitsgraden, das unter der Einwirkung einer äußeren Anregung steht.

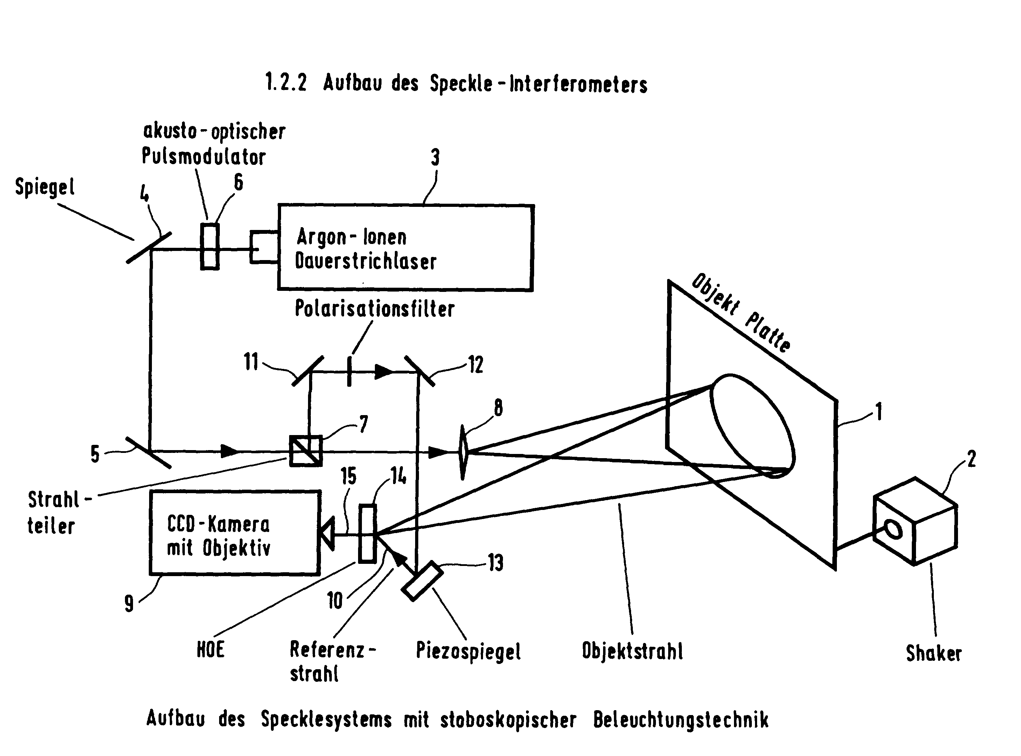

Anhand eines in der Zeichnung dargestellten Ausführungsbeispiels ist die Erfindung weiter erläutert.

Die einzige Figur zeigt schematisch den Aufbau einer Vorrichtung, mit deren Hilfe das erfindungsgemäße Verfahren zum Bestimmen des Schwingungsverhaltens eines Körpers durchgeführt wird. Bei dem Körper handelt es sich um eine Metall-Platte 1, die mit Hilfe eines Shakers 2 mit einer definierten Frequenz von beispielsweise 100 Hz angeregt wird. Der Shaker 2 greift an einer Ecke der Platte 1 an.

Zur Gewinnung eines Interferenzbildes der sich in der Platte auszubildenden Schwingungsform wird die Platte 1 mit einem (Argon-Ionen-Dauerstrich-) Laser 3 beleuchtet. Im Strahlengang des Lasers 3 befinden sich zwei Umlenkspiegel 4 und 5, ein akusto-optischer Modulator 6, ein Strahlteiler 7 und eine Beleuchtungsoptik, die als Linse 8 schematisiert ist. Zur Aufnahme des Interferenzbildes dient eine Kamera 9, der über eine geeignete Optik das Bild der Platte zusammen mit einem Referenzstrahl 10 zugeführt ist, der mit Hilfe des Strahlteilers sowie weiteren Umlenkspiegeln 11 und 12 sowie einem Piezo-Spiegel 13 gewonnen und axial über ein Holografisch-Optisches-Element in den Objektstrahl 15 eingeblendet wird.

Ausgangspunkt der rechnergestützten Auswertung ist das Interferenzstreifenmuster, dessen Helligkeitsverteilung mit der Kamera 9 aufgenommen wird. Die Intensität in diesem Muster wird vereinfacht durch die folgende Gleichung beschrieben.

$$I_k(x) = a(x) * (1+m(x) * \cos[\varphi(x) + \Psi_k], \quad k = 1, 2, 3$$

mit

x = Ortsvektor, der den einzelnen Bildpunkt bezeichnet,
a(x) = lokale mittlere Intensität,
m(x) = Streifenkontrast und
$\Psi_k$ = eine relative feste Phase.

Die physikalisch relevante Größe, die Interferenzphase $\varphi(x)$ muß unabhängig von a(x) und m(x) an einem beliebigen Bildpunkt x ermittelt werden. Für die Bestimmung der Interferenzphase wird beispielsweise hier das Phasenschiebe-Verfahren verwendet. Aus drei Werten I(x) können alle drei Unbekannten a(x), m(x) und $\varphi(x)$ der o.g. Gleichung bestimmt werden:

Zur Gewinnung dieser drei Werte wird die relative Interferenzphase mit Hilfe einer optischen Weglängenänderung verschoben. Hierzu dient der Piezo-Spiegel 13. Dabei entspricht die Auslenkung des Spiegels um eine halbe Laser-Wellenlänge einer Phasenänderung um $2\pi$. Da die Laser-Wellenlänge bekannt ist, läßt sich hieraus die Auslenkung des Objekts am jeweiligen Bildpunkt errechnen.

Zur Untersuchung ausgesuchter Schwingungszustände wird eine stroboskopische Beleuchtung des Objekts 1 gewählt. Hierzu wird der kontinuierliche Laserstrahl mit dem Modulator 6 gepulst. Die Pulsfrequenz, mit der der Modulator 6 betrieben wird, ist mit der Anregungsfrequenz des Objekts 1, d.h. der Ausgangsfrequenz des Shakers 2 synchronisiert. Damit erfolgt die stroboskopische Beleuchtung des Objekts synchron mit seiner Erregungsfrequenz.

Um Real- und Imaginärteil der Schwingung in Bezug auf die erzeugende Kraft jedes Bildpunkts errechnen zu können, ist es zweckmäßig, mindestens zwei Interferenzbilder von voneinander verschiedenen Schwingungszuständen aufzunehmen. Unter der Annahme, daß die Schwingung jedes Bildpunkts mit der Erregungsfrequenz erfolgt, läßt sich dann aus den beiden momentanen Auslenkungswerten die Amplitude und Phase der Schwingung des Bildpunktes ermitteln.

Die Real- und Imaginäranteile der Verformung in einem gegebenen Punkt P mit Bezug auf die Anregungskraft ergeben sich zu

$$Re(\chi_P(\omega))= \frac{\chi_P(t_2)\sin(\omega t_1)- \chi_P(t_1)\sin(\omega t_2)}{\sin(\omega t_1)\cos(\omega t_2)-\sin(\omega t_2)\cos(\omega t_1)}$$

$$Im(\chi_P(\omega))= \frac{\chi_P(t_1)\cos(\omega t_2)- \chi_P(t_2)\cos(\omega t_1)}{\sin(\omega t_1)\cos(\omega t_2)-\sin(\omega t_1)\cos(\omega t_1)}$$

Werden die oben erwähnten Untersuchungen mit einer entsprechenden Anzahl verschiedener Frequenzen (ω) der Anregungskraft innerhalb eines definierten, interessanten Frequenzbandes ausgeführt, kann die Übertragungsfunktion der Strukturverformungen bestimmt werden.

Die auf diese Weise gewonnene Information über die Bewegung der einzelnen Bildpunkte, d.h. insbesondere hinsichtlich ihrer Amplitude und ihrer Phase, bezogen auf die Anregungskraft des Shakers 2 liefert somit eine Information über das amplituden- und phasenmäßige Auslenkverhalten der einzelnen Meßpunkte des Objekts 1. Diese Information, die bei einer üblichen Modalanalyse der von diskreten Beschleunigungsgebem gelieferten Information entspricht, wird dann mit Hilfe von numerischen modalanalytischen Untersuchungen zur Bestimmung und Analyse des Schwingungsverhaltens des Objekts verwendet. Damit ist es möglich, eine Modalanalyse ohne jegliche Beeinflussung des Objekts durch diskrete Meßgeber durchzuführen. Durch das Fehlen massebehafteter Meßgeber ergibt sich zudem der Vorteil, die Strukturdeformation rückwirkungsfrei untersuchen zu können. Die Dichte der Meßpunkte unterliegt keinen Beschränkungen. Schließlich lassen sich im Gegensatz zur bekannten Modalanalyse mit diskreten Meßgebem auch hohe Eigenfrequenzen der Struktur bestimmen.

**Patentansprüche**

1.  Verfahren zum Bestimmen des Schwingungsverhaltens eines Körpers mittels Modalanalyse, wobei der Körper zu Schwingungen mit einer Anzahl verschiedener Frequenzen (ω) einer Anregungskraft innerhalb eines definerten Frequenzbandes angeregt wird und mindestens zwei optische Interferenzbilder von voneinander verschiedenen Schwingungszuständen des Körpers aufgenommen werden, wobei eine stroboskopische Beleuchtung des Körpers synchron mit der Anregungsfrequenz erfolgt, und wobei unter Zugrundelegen eines mathematisch/physikalischen Modells, das die Bewegungsgleichungen eines unter der Einwirkung einer äußeren Anregung stehenden, linearen, zeitinvarianten elastomechanischen Systems mit mehreren Freiheitsgraden beinhaltet, die Interferenzbilder hinsichtlich des an vorgegebenen Stellen vorliegenden Schwingungsverhaltens analysiert werden und die aus der Analyse der Real- und Imaginäranteile der Verformung dieser Stellen gewonnene Information hinsichtlich des durch ihre Amplitude und Phase bezogen auf die Anregungskraft bestimmten Auslenkverhaltens ohne Applikation von Meßwertaufnehmern der Modalanalyse unterworfen wird.

2.  Verfahren nach Anspruch 1, **dadurch gekennzeichnet,** daß die optischen Interferenzbilder mittels Lasertechnik gewonnen wird.

3.  Verfahren nach Anspruch 2, **dadurch gekennzeichnet,** daß die Interferenzbilder Hologramme sind.

4.  Verfahren nach Anspruch 2, **dadurch gekennzeichnet**, daß die Interferenzbilder mittels Speckle-Interferometrie gewonnen werden.

5.  Verfahren nach Anspruch 3, **dadurch gekennzeichnet,** daß die Hologramme durch Doppelpuls-Interferometrie gewonnen werden.

6.  Verfahren nach Anspruch 1, **dadurch gekennzeichnet,** daß die Anregungsfrequenz in gleichmäßigen Schritten geändert wird.

**Claims**

1.  A method of determining the vibration characteristics of a body by modal analysis, wherein the body is excited so as to vibrate at a number of different frequencies (ω) of an exciting force within a defined frequency band and at least two optical interference patterns of different vibration states of the body are recorded, wherein the body is stroboscopically illuminated in synchronism with the exciting frequency and wherein the interference patterns are analysed regarding the vibration characteristics at set places, using a mathematical/physical model containing the equation of motion of an externally excited, linear, time-invariant elastomechanical system having a number of degrees of freedom and the information obtained from analysis of the real and imaginary parts of the deformation at these places, with regard to the deflection characteristics determined by their amplitude and phase relative to the exciting force, is subjected to modal analysis without use of transducers.

2.  A method according to claim 1, characterised in that the optical interference patterns are obtained by laser technology.

3.  A method according to claim 2, characterised in that the interference patterns are holograms.

4.  A method according to claim 2, characterised in that the interference patterns are obtained by speckle interferometry.

5. A method according to claim 3, characterised in that the holograms are obtained by double-pulse interferometry.

6. A method according to claim 1, characterised in that the exciting frequency is altered in uniform steps.

**Revendications**

1. Procédé pour déterminer les caractéristiques vibratoires d'un corps par une analyse modale, selon lequel

   - on excite le corps avec une force d'excitation pour le faire vibrer à un certain nombre de fréquences différentes ($\omega$) à l'intérieur d'une bande de fréquence définie,
   - on enregistre au moins deux images d'interférences optiques d'états différents d'oscillation, du corps,
   - on éclaire le corps par stroboscopie en synchronisme avec la fréquence d'excitation et,
   - à l'aide d'un modèle mathématique/physique contenant les équations de mouvement d'un système élastomécanique à plusieurs degrés de liberté, linéaire et invariant dans le temps, et soumis à l'action d'une excitation extérieure, on analyse l'image d'interférences des caractéristiques vibratoires existant aux endroits prédéterminés et on soumet à une analyse modale l'information obtenue, par l'analyse des parties réelles et imaginaires de la déformation de ces points pour le comportement aux débattements définis par leur amplitude et leur phase par rapport à la force d'excitation, sans utiliser de capteurs de valeurs de mesures.

2. Procédé selon la revendication 1, caractérisé en ce que on forme les images d'interférences optiques par laser.

3. Procédé selon la revendication 2, caractérisé en ce que les images d'interférences sont des hologrammes.

4. Procédé selon la revendication 2, caractérisé en ce que les images d'interférences sont obtenues par interférométrie à tavelures (Speckle).

5. Procédé selon la revendication 3, caractérisé en ce que les hologrammes sont obtenus par interférométrie à impulsion double.

6. Procédé selon la revendication 1, caractérisé en ce que la fréquence d'excitation est modifiée à des intervalles réguliers.

## 1.2.2 Aufbau des Speckle-Interferometers

Aufbau des Specklesystems mit stoboskopischer Beleuchtungstechnik

EP 0 774 109 B1